# EUROPEAN PATENT SPECIFICATION

(11) **EP 3 211 615 B1**
(45) Date of publication and mention of the grant of the patent: **01.04.2020**
(21) Application number: 17156771.2
(22) Date of filing: 17.02.2017
(51) Int. Cl.: G08C 17/02, H04W 4/80

(54) **PROCESSING METHOD AND PROCESSING APPARATUS FOR BINDING A REMOTE CONTROLLER, COMPUTER PROGRAM AND RECORDING MEDIUM**
VERARBEITUNGSVERFAHREN, VERARBEITUNGSVORRICHTUNG ZUR PAARUNG EINER DRAHTLOSEN STEUERUNGSVORRICHTUNG, COMPUTERPROGRAMM UND AUFZEICHNUNGSMEDIUM
PROCÉDÉ ET APPAREIL D'APPARIEMENT D'UN DISPOSITIF DE COMMANDE SANS FIL, PROGRAMME INFORMATIQUE ET SUPPORT DE STOCKAGE.

(30) Priority: 24.02.2016 CN 201610102819
(43) Date of publication of application: 30.08.2017
(73) Proprietor: Beijing Xiaomi Mobile Software Co., Ltd., Beijing 100085 (CN)
(72) Inventor: ZHANG, Yanlu, Haidian District, Beijing 100085 (CN); MENG, Deguo, Haidian District, Beijing 100085 (CN); HOU, Enxing, Haidian District, Beijing 100085 (CN)
(74) Representative: Robson, Aidan John

(56) References cited:
- US-A1- 2011 095 873
- US-A1- 2013 117 384
- US-A1- 2014 273 844
- US-A1- 2015 273 609

## Description

### TECHNICAL FIELD

The present invention is related to smart terminals, and more particularly, to a processing method and a processing apparatus for binding a remote controller, a computer program and a recording medium.

### BACKGROUND

With the popularization of smart home appliances, more and more smart home appliances (such as smart TVs, smart air conditioners etc.) are used in daily life. Accordingly, there is also an increasing number of remote controllers (such as infrared remote controllers, Bluetooth remote controllers etc.) around a user for controlling these home appliances. The user usually needs a long time to find a desired remote controller. Some remote controllers are similar in appearance, which makes it harder for the user to identify the desired one and hence results in poor user experience.

US 2014/0273844 A1 of Castillo et al teaches a remote control and a content player that are configured to facilitate a secured pairing process. The remote control is configured to send non-secured signals as well as to send and receive secured signals via Bluetooth. The remote control, in response to being turned or asked to pair, sends a pairing request to the player that includes an identifier for the remote control and which identifies the remote control as an eligible pairing device without separate entry of a security code by a user. The remote control and player then perform a pairing process without requiring additional action on the part of a user.

US 2013/0117384 A1 of EchoStar Technologies L.L.C. teaches a control device which transmits a first type of signal and a second type of signal as part of transmitting an instruction. An electronic device receives the first signal and determines the control device is paired with another device. The electronic device displays a notification indicating such as well as a prompt requesting confirmation to pair the control device. Upon receiving an affirmative response, the electronic device notifies the other device, which transmits unpairing information to the control device. The control device then unpairs from the other device. The other device also transmits pairing information to the control device via the electronic device and the the control device utilizes the informatioon to pair with the electronic device.

US 2015/0273609 A1 of Illinois Tool Works Inc. teaches a method of wireless control of a welding power supply via portable electronic devices. Operating parameters and statuses of the welding poer supply may be modified by the portable electronic device, as well as be displayed on the portable electronic device. A pairing procedure may be used to pair the welding power supply and the portable electronic device in a wireless communication network. A method of prioritization of control between the control panel of the welding power supply and the portable electronic device is also disclosed.

### SUMMARY

The present invention provides a processing method for binding a remote controller, a processing apparatus for binding a remote controller, a computer program and a recording medium, in order to solve the problem that a user needs a long time to find a desired remote controller and some remote controllers are similar in appearance, which makes it harder for the user to identify the desired one and hence results in poor user experience.

According to a first aspect of embodiments of the present invention, there is provided a processing method for binding a remote controller, comprising: acquiring a binding operation instruction by a remote controller; sending, by the remote controller, a binding request containing identification information of the remote controller to a remotely controlled device which the remote controller is to be bound with, such that the remotely controlled device generates a binding response message based on the binding request, the binding response message carrying authentication information for binding the remote controller; receiving, by the remote controller, the binding response message returned by the remotely controlled device; and performing, by the remote controller, authentication based on the authentication information in the binding response message, and binding, by the remote controller with the remotely controlled device if the authentication is successful, so as to control the remotely controlled device.

According to the technical solution provided by the embodiments of the present invention, a remote controller acquires a binding operation instruction from a user, and sends a binding request to a remotely controlled device which the remote controller is to be bound with, such that the remotely controlled device generates related authentication information for binding the remote controller. As such, the same remote controller can be bound with multiple devices to realize collective control, thereby avoiding the problem that it is hard to identify a desired remote controller from multiple remote controllers and hence enhancing the user experience.

Further, acquiring the binding operation instruction by the remote controller comprises: detecting, by the remote controller, a user's pressing operation on a binding key, as the binding operation instruction; or detecting, by the remote controller, a user's shaking operation on the remote controller, as the binding operation instruction.

According to the technical solution provided by the embodiments of the present invention, a remote controller can detect a binding operation instruction by detecting a user's pressing operation on a binding key or by identifying a special shaking operation of the user. As such, the remote controller can be bound with the remotely controlled device through simple and convenient operations.

Optionally, sending by the remote controller the binding request containing the identification information of the remote controller to the remotely controlled device which the remote controller is to be bound with comprises: sending, by the remote controller, the binding request containing the identification information of the remote controller through Bluetooth broadcasting, wherein the binding response message comprises Bluetooth pairing information generated by the remotely controlled device.

Further, the method further comprises: remotely controlling the remotely controlled device by the remote controller based on an operation of a user.

According to the technical solution provided by the embodiments of the present invention, a specific implementation is to perform binding via Bluetooth. In this implementation, a remote controller broadcasts a binding request message. A device which the remote controller is to be bound with is provided with a module that responds to the binding request, while a device which the remote controller does not need to be bound with is not provided with such a module. For example, a handset does not need to be controlled by the remote controller, so the handset does not respond to the Bluetooth broadcasting message. The remotely controlled device generates corresponding pairing information, and has the remote controller automatically bound therewith after pairing therewith. As such, a user can control operations of the remotely controlled device using the remote controller and meanwhile bind the remote controller with other devices, thereby avoiding the problem that it is hard to identify a desired remote controller from multiple remote controllers and effectively enhancing the user experience.

Optionally, after remotely controlling the remotely controlled device by the remote controller based on the operation of the user, the method further comprises: acquiring, by the remote controller, an unbinding operation instruction; sending, by the remote controller, a first unbinding request containing the identification information of the remote controller to the remotely controlled device which the remote controller is bound with, such that the remotely controlled device releases the binding relation with the remote controller and generates an unbinding response message; and receiving, by the remote controller, the unbinding response message sent by the remotely controlled device.

Optionally, after remotely controlling the remotely controlled device by the remote controller based on the operation of the user, the method further comprises: receiving, by the remote controller, a second unbinding request sent by the remotely controlled device, the second unbinding request being sent after the remotely controlled device detects an unbinding operation instruction from the user; and releasing, by the remote controller, the binding relation with the remotely controlled device based on the second unbinding request.

According to the technical solution provided by the embodiments of the present invention, after the remote controller is bound with the remotely controlled device according to any of the above solutions, multiple devices can be operated by the same remote controller. If the binding needs to be released, it can be realized by operating either the remote controller or the remotely controlled device. Similar to the binding process, it is needed to send an unbinding message to the counterpart according to the user's operation, in order to release the binding. Thus, binding and unbinding can be realized at the user's will, thereby improving the ease of use and effectively enhancing the user experience.

According to a second aspect of the embodiments not belonging to the present invention, there is provided a processing method for binding a remote controller, comprising: receiving, by a remotely controlled device, a binding request containing identification information of the remote controller and sent by the remote controller; generating, by the remotely controlled device, a binding response message based on the binding request, the binding response message carrying authentication information for binding the remote controller; and sending, by the remotely controlled device, the binding response message to the remote controller, such that the remote controller performs binding with the remotely controlled device based on the binding response message so as to control the remotely controlled device.

Further, the method further comprises: receiving, by the remotely controlled device, an operation request sent by the remote controller; and performing, by the remotely controlled device, a corresponding operation based on the operation request.

According to the technical solution provided by the embodiments of the present invention, when no remote controller is bound with the remotely controlled device, it generates a binding response message carrying authentication information after receiving the binding request sent by the remote controller, and sends the same to the remote controller for mutual authentication. Then, the binding is performed, and the remotely controlled device performs related functions based on the operations of the bound remote controller. This solution eliminates the need to operate the remotely controlled device by using a remote controller dedicated thereto. Rather, the remotely controlled device can be operated as long as the binding is performed, thereby avoiding the problem that it is hard to promptly identify a desired remote controller from multiple remote controllers and improving the ease of use by the user.

Further, the method further comprises: receiving, by the remotely controlled device, a first unbinding request containing the identification information of the remote controller and sent by the remote controller; releasing, by the remotely controlled device, the binding relation with the remote controller and generating, by the remotely controlled device, an unbinding response message, based on the first unbinding request; and sending, by the remotely controlled device, the unbinding response message to the remote controller.

Optionally, the method further comprises: detecting, by the remotely controlled device, an unbinding operation instruction from a user; generating, by the remotely controlled device, a second unbinding request based on the unbinding operation instruction; and sending, by the remotely controlled device, the second unbinding request to the remote controller, so as to release the binding relation with the remote controller.

According to the technical solution provided by the embodiments of the present invention, the remotely controlled device can either initiatively make an unbinding request to the remote controller based on the user's operation or receive an unbinding request from the remote controller, in order to release the binding relation between the remote controller and the remotely controlled device. Thus, binding and unbinding can be realized at the user's will, thereby improving the ease of use and effectively enhancing the user experience.

According to a third aspect of embodiments of the present invention, there is provided a processing apparatus for binding a remote controller, comprising: an acquiring module configured to acquire a binding operation instruction; a sending module configured to send a binding request containing identification information of the processing apparatus for binding the remote controller to a remotely controlled device which the remote controller is to be bound with, such that the remotely controlled device generates a binding response message based on the binding request, the binding response message carrying authentication information for binding the processing apparatus for binding the remote controller; a receiving module configured to receive the binding response message returned by the remotely controlled device; and a first processing module configured to perform authentication based on the authentication information in the binding response message, and binding with the remotely controlled device if the authentication is successful, so as to control the remotely controlled device.

Further, the acquiring module comprises: a first detecting unit configured to detect a user's pressing operation on a binding key as the binding operation instruction; or a second detecting unit configured to detect a user's shaking operation on the remote controller as the binding operation instruction.

Optionally, the sending module comprises: a Bluetooth communication unit configured to send the binding request containing the identification information of the processing apparatus for binding the remote controller through Bluetooth broadcasting, wherein the binding response message received by the receiving module comprises Bluetooth pairing information generated by the remotely controlled device.

Further, the apparatus also comprises: a second processing module configured to remotely control the remotely controlled device based on an operation of a user.

Further, the acquiring module comprises a first acquiring unit configured to acquire an unbinding operation instruction. The sending module comprises a first sending unit configured to send a first unbinding request containing the identification information of the processing apparatus for binding the remote controller to the remotely controlled device which the remote controller is bound with, such that the remotely controlled device releases the binding relation with the processing apparatus for binding the remote controller and generates an unbinding response message. The receiving module comprises a first receiving unit configured to receive the unbinding response message sent by the remotely controlled device.

Optionally, the receiving module comprises a second receiving unit configured to receive a second unbinding request sent by the remotely controlled device, the second unbinding request being sent after the remotely controlled device detects an unbinding operation instruction from the user. The first processing module is further configured to release the binding relation with the remotely controlled device based on the second unbinding request.

According to a fourth aspect of embodiments not belonging to the present invention, there is provided a processing apparatus for binding a remote controller, comprising: a receiving module configured to receive a binding request containing identification information of the remote controller and sent by the remote controller; a processing module configured to generate a binding response message based on the binding request, the binding response message carrying authentication information for binding the remote controller; and a sending module configured to send the binding response message to the remote controller, such that the remote controller performs binding with the processing apparatus for binding the remote controller based on the binding response message, so as to control the remotely controlled device.

Optionally, the receiving module comprises a Bluetooth communication unit configured to receive the binding request containing the identification information of the remote controller and broadcast by the remote controller via Bluetooth, wherein the binding response message comprises Bluetooth pairing information generated by the processing apparatus for binding the remote controller.

Further, the receiving module comprises: a first receiving unit configured to receive an operation request sent by the remote controller and perform a corresponding operation based on the operation request.

Optionally, the receiving module further comprises: a second receiving unit configured to receive a first unbinding request containing the identification information of the remote controller and sent by the remote controller. The processing module comprises a first processing unit configured to release the binding relation with the remote controller and generate an unbinding response message, based on the first unbinding request. The sending module comprises a first sending unit configured to send the unbinding response message to the remote controller.

Further, the apparatus also comprises: a detecting module configured to detect an unbinding operation instruction from a user. The processing module comprises a second processing unit configured to generate a second unbinding request based on the unbinding operation instruction; and the sending module comprises a second sending unit configured to send the second unbinding request to the remote controller so as to release the binding relation with the remote controller.

According to a fifth aspect of embodiments not belonging to the present invention, there is provided a remote controller, comprising: a processor configured to control execution of executable instructions, a memory configured to store the executable instructions executable by the processor, a receiver and a transmitter. The processor is configured to acquire a binding operation instruction. The transmitter is configured to send a binding request containing identification information of the remote controller to a remotely controlled device which the remote controller is to be bound with, such that the remotely controlled device generates a binding response message based on the binding request, the binding response message carrying authentication information for binding the remote controller. The receiver is configured to receive the binding response message returned by the remotely controlled device. The processor is further configured to perform binding with the remotely controlled device based on the binding response message, so as to control the remotely controlled device.

According to a sixth aspect of embodiments not belonging to the present invention, there is provided a remotely controlled device, comprising: a processor configured to control execution of executable instructions, a memory configured to store the executable instructions executable by the processor, a receiver and a transmitter. The receiver is configured to receive a binding request containing identification information of a remote controller and sent by the remote controller. The processor is configured to generate a binding response message based on the binding request, the binding response message carrying authentication information for binding the remote controller. The transmitter is configured to send the binding response message to the remote controller, such that the remote controller performs binding with the remotely controlled device based on the binding response message so as to control the remotely controlled device.

In one particular embodiment, the steps of the processing method for binding a remote controller are determined by computer program instructions.

Consequently, according to a seventh aspect, the invention is also directed to a computer program for executing the steps of a processing method for binding a remote controller as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to the processing method for binding a remote controller, the processing apparatus for binding a remote controller and the device provided by the present invention, a remote controller acquires a binding operation instruction from a user, and sends a binding request to a remotely controlled device which the remote controller is to be bound with, such that the remotely controlled device generates related authentication information for binding the remote controller. As such, the same remote controller can be bound with multiple devices to realize collective control, thereby avoiding the problem that it is hard to promptly identify a desired remote controller from multiple remote controllers. In addition, unbinding can be performed according to the user's selection, thereby facilitating control of home appliances and enhancing the user experience.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a first embodiment of a processing method for binding a remote controller according to the invention.
Fig. 2 is a flow chart showing a second embodiment of the processing method for binding the remote controller according to the invention.
Fig. 3 is a flow chart showing a third embodiment of the processing method for binding the remote controller according to the invention.
Fig. 4 is a flow chart showing a fourth embodiment of the processing method for binding the remote controller according to the invention.
Fig. 5 is a flow chart showing a fifth embodiment of the processing method for binding the remote controller according to the invention.
Fig. 6 is a block diagram illustrating a first embodiment of a processing apparatus for binding a remote controller according to the invention.
Fig. 7 is a block diagram illustrating a second embodiment of the processing apparatus for binding the remote controller according to the invention.
Fig. 8 is a block diagram illustrating a third embodiment of the processing apparatus for binding the remote controller according to the invention.
Fig. 9 is a block diagram illustrating a fourth embodiment of the processing apparatus for binding the remote controller according to the invention.
Fig. 10 is a block diagram illustrating a fifth embodiment of the processing apparatus for binding the remote controller according to the invention.
Fig. 11 is a block diagram illustrating a sixth embodiment of the processing apparatus for binding the remote controller according to the invention.
Fig. 12 is a block diagram illustrating a seventh embodiment of the processing apparatus for binding the remote controller according to the invention.
Fig. 13 is a block diagram illustrating an eighth embodiment of the processing apparatus for binding the remote controller according to the invention.
Fig. 14 is a block diagram illustrating a ninth embodiment of the processing apparatus for binding the remote controller according to the invention.
Fig. 15 is a block diagram illustrating a tenth embodiment of the processing apparatus for binding the remote controller according to the invention.
Fig. 16 is a block diagram illustrating an eleventh embodiment of the processing apparatus for binding the remote controller according to the invention.
Fig. 17 is a block diagram showing a physical structure of a remote controller according to an exemplary embodiment.
Fig. 18 is a block diagram showing a physical structure of a remotely controlled device according to an exemplary embodiment.
Fig. 19 is a block diagram of a remotely controlled device 1200 according to an exemplary embodiment.
Fig. 20 is a block diagram of a remote controller 1900 according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of apparatuses and methods consistent with aspects related to the invention as recited in the appended claims.

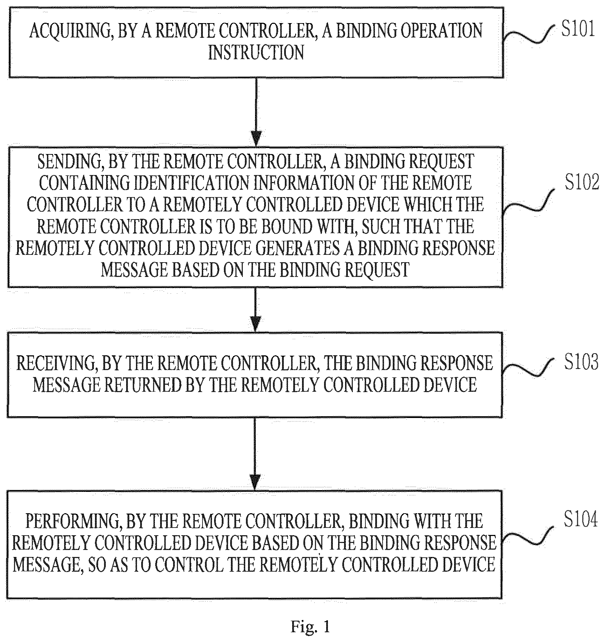

Fig. 1 is a flow chart showing a first embodiment of a processing method for binding a remote controller according to the invention. As shown in Fig. 1, the method is mainly used in the remote controller. The remote controller can be bound with and control different terminals based on a user's operations, the terminals including home appliances, such as TVs, air conditioners, etc. The processing method for binding the remote controller comprises the steps as follows.

In step S101, the remote controller acquires a binding operation instruction.

In this step, when a user intends to control a device using the remote controller, he needs to bind the remote controller with the corresponding remotely controlled device, so that the remote controller can control the remotely controlled device. Specific implementations for the remote controller to acquire the binding operation instruction may include at least one of the following.

In a first implementation, the remote controller detects a user's pressing operation on a binding key as the binding operation instruction. That is, the user may issue an operation instruction by pressing a key dedicatedly arranged on the remote controller for binding, or the binding may be realized by long-pressing a specific function key, as specifically set according to actual needs.

In a second implementation, the remote controller detects a user's shaking operation on the remote controller as the binding operation instruction. That is, a user's movement trajectory for binding may be preset. When it is detected that a movement trajectory of the remote controller is substantially the same as the preset movement trajectory for binding, it is considered that the user intends to perform the binding.

In step S102, the remote controller sends a binding request containing identification information of the remote controller to a remotely controlled device which the remote controller is to be bound with, such that the remotely controlled device generates a binding response message based on the binding request.

In this step, the remote controller sends the binding request containing identification information of the remote controller to the remotely controlled device based on the acquired binding operation instruction, such that the remotely controlled device judges whether to respond, wherein the binding response message carries authentication information for binding the remote controller. If the remotely controlled device has no remote controller bound therewith or allows the remote controller to be bound with, the remotely controlled device generates related authentication information and returns the same to the remote controller.

The binding request may be sent through broadcasting or targeted unicasting or multicasting, which will not be limited in this invention. For example, the binding request may be sent via Bluetooth. The remote controller sends the binding request containing the identification information of the remote controller through Bluetooth broadcasting, and the binding response message comprises Bluetooth pairing information generated by the remotely controlled device.

The identification information may be a device identification of the remote controller, a media access control address thereof or any other identification thereof, which will not be limited in this invention.

In step S103, the remote controller receives the binding response message returned by the remotely controlled device.

In step S104, the remote controller performs binding with the remotely controlled device based on the binding response message, so as to control the remotely controlled device.

In this step, the remote controller performs authentication based on the authentication information in the binding response message, confirms that the remotely controlled device allows the remote controller to be bound therewith, and performs binding with the remotely controlled device so as to control the remotely controlled device.

When the binding is performed via Bluetooth, the remote controller receives the Bluetooth pairing information. After pairing according to the pairing information, the remote controller sends a pairing success message to the remotely controlled device. Thus, a Bluetooth connection is established, and binding for controlling the remotely controlled device is realized.

The remote controller can control the remotely controlled device to perform a corresponding function based on an operation of the user. That is, the remote controller can remotely control the remotely controlled device based on an operation of the user.

According to the processing method for binding a remote controller provided by the embodiment of the present invention, a remote controller acquires a binding operation instruction from a user, and sends a binding request to a remotely controlled device which the remote controller is to be bound with, such that the remotely controlled device generates related authentication information for binding the remote controller. As such, the same remote controller can be bound with multiple devices to realize collective control, thereby avoiding the problem that it is hard to promptly identify a desired remote controller from multiple remote controllers and enhancing the user experience.

Further, a specific implementation is to perform binding via Bluetooth. In this implementation, a remote controller broadcasts a binding request message. A device which the remote controller is to be bound with is provided with a module that responds to the binding request, while a device which the remote controller does not need to be bound with is not provided with such a module. For example, a handset does not need to be controlled by the remote controller, so the handset does not respond to the Bluetooth broadcasting message. The remotely controlled device generates corresponding pairing information, and has the remote controller automatically bound therewith after pairing therewith. As such, a user can control operations of the remotely controlled device using the remote controller and meanwhile bind the remote controller with other devices, thereby avoiding the problem that it is hard to identify a desired remote controller from multiple remote controllers and effectively enhancing the user experience.

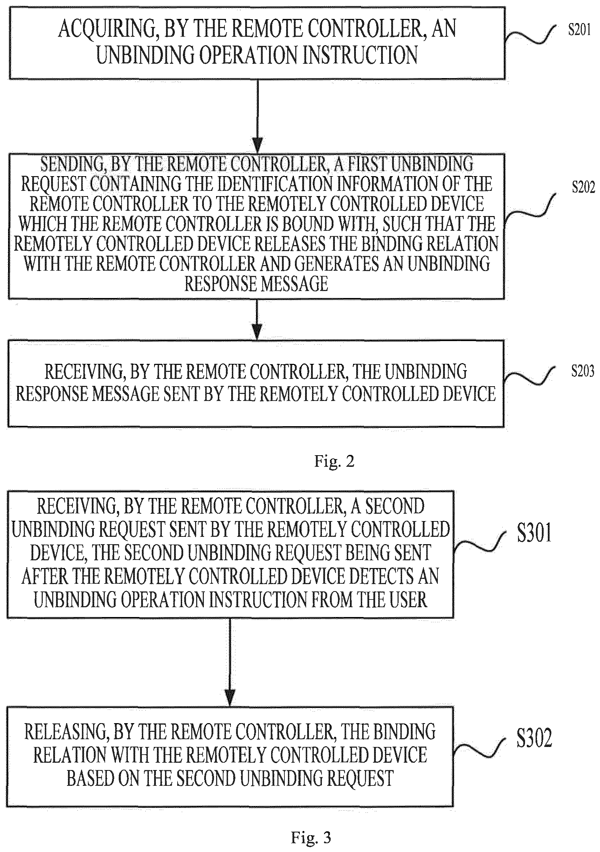

Fig. 2 is a flow chart showing a second embodiment of the processing method for binding the remote controller according to the invention. As shown in Fig. 2, after the remote controller and the remotely controlled device are bound so that the former can control the latter, the binding relation may be cancelled according to actual needs. That is, after S104, the processing method for binding the remote controller may further comprise steps S201-S203 as below.

In step S201, the remote controller acquires an unbinding operation instruction.

In this step, if the user needs to release the binding (that is, to cancel the right of the remote controller to control the bound remotely controlled device), an operation on a specific key by the user or a special movement trajectory may be acquired as an unbinding operation instruction, similarly to the above implementations for acquiring the binding operation instruction.

In step S202, the remote controller sends a first unbinding request containing the identification information of the remote controller to the remotely controlled device which the remote controller is bound with, such that the remotely controlled device releases the binding relation with the remote controller and generates an unbinding response message.

In step S203, the remote controller receives the unbinding response message sent by the remotely controlled device.

In this embodiment, if the user needs to release the binding between the remote controller and the remotely controlled device, an unbinding request may be sent to the latter, requesting the remotely controlled device to release the binding relation. Then, the remotely controlled device cancels the control right of the remote controller based on an identification of the remote controller, and returns an unbinding response message, thereby releasing the binding with the remote controller. If it is needed to control the remotely controlled device by using the remote controller later, binding may be performed again according to the embodiment shown in Fig. 1.

Fig. 3 is a flow chart showing a third embodiment of the processing method for binding the remote controller according to the invention. As shown in Fig. 3, which illustrates a solution alternative to that shown in Fig. 2, after the remote controller and the remotely controlled device are bound so that the former can control the latter, the binding relation may be cancelled according to actual needs. That is, after S104, the processing method for binding the remote controller may comprise steps S301-S302 as below.

In step S301, the remote controller receives a second unbinding request sent by the remotely controlled device, the second unbinding request being sent after the remotely controlled device detects an unbinding operation instruction from the user.

In step S302, the remote controller releases the binding relation with the remotely controlled device based on the second unbinding request.

The solution shown in Fig. 3 is alternative to that shown in Fig. 2. That is, when it is needed to perform unbinding, the unbinding may be triggered by either the remote controller or the remotely controlled device. Upon detecting an operation by the user on the remotely controlled device, such as the user's pressing on a special key for releasing the binding with the remote controller, an unbinding request is generated and sent to the remote controller.

According to the processing method for binding the remote controller provided by the above two embodiments of the present invention, after the remote controller is bound with the remotely controlled device according to any of the above solutions, multiple devices can be operated by the same remote controller. If the binding needs to be released, it can be realized by operating either the remote controller or the remotely controlled device. Similar to the binding process, it is needed to send an unbinding message to the counterpart bound device according to the user's operation, in order to release the binding. Thus, binding and unbinding can be realized at the user's will, thereby improving the ease of use and effectively enhancing the user experience.

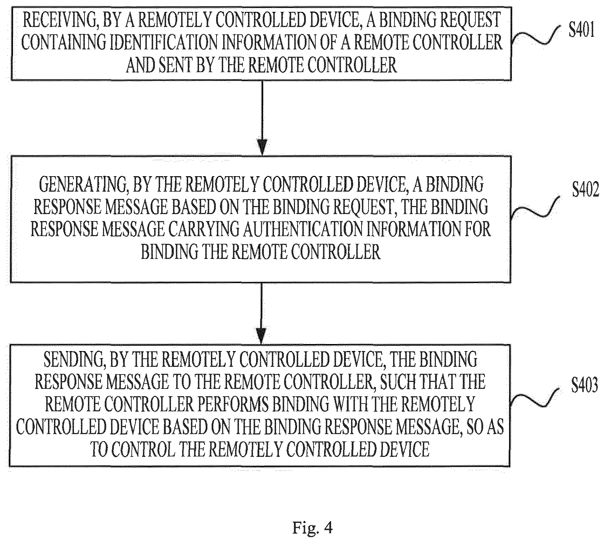

Fig. 4 is a flow chart showing a fourth embodiment of the processing method for binding the remote controller according to the invention. As shown in Fig. 4, the executor of the method is a remotely controlled device, which may be a home appliance such as a TV, an air conditioner, etc. The processing method for binding the remote controller comprises steps S401-S403 as below.

In step S401, the remotely controlled device receives a binding request containing identification information of the remote controller and sent by the remote controller.

In this embodiment, the remotely controlled device receives a binding request sent by the remote controller. The binding request may be a broadcasting message, a unicasting message targeted to the remotely controlled device or a multicasting message targeted to a certain type of devices. The remotely controlled device is provided with a module that can respond to the binding request, while a device that does not need to be controlled by the remote controller does not process and respond to the request after receiving the request.

In step S402, the remotely controlled device generates a binding response message based on the binding request, the binding response message carrying authentication information for binding the remote controller.

In this step, the binding response message needs to indicate whether to approve the binding. If the remotely controlled device approves establishment of a binding relation with the remote controller, configurations can be performed directly, and a binding complete response may be returned. Also, corresponding authentication information may be generated according to the above solution, so that the remote controller can perform recognition and authentication to complete pairing. One specific implementation is to use Bluetooth. Specially, the remotely controlled device receives the binding request containing identification information of the remote controller and sent by the remote controller through Bluetooth broadcasting, and generates a binding response message comprising Bluetooth pairing information.

In step S403, the remotely controlled device sends the binding response message to the remote controller, such that the remote controller completes binding with the remotely controlled device based on the binding response message so as to control the remotely controlled device.

In this step, taking Bluetooth as an example, the remotely controlled device returns pairing information to the remote controller. The remote controller performs pairing based on the pairing information. Thus, a Bluetooth connection is established between the remotely controlled device and the remote controller, and binding for controlling the remotely controlled device is realized.

After binding between the remote controller and the remotely controlled device is realized according to the above solution, the user can control the remotely controlled device by operating the remote controller. The remotely controlled device receives an operation request sent by the remote controller, and performs a corresponding operation based on the operation request.

According to the processing method for binding a remote controller provided by the embodiment of the present invention, when no remote controller is bound with the remotely controlled device, the remotely controlled device generates a binding response message carrying authentication information after receiving the binding request sent by the remote controller, and sends the same to the remote controller for mutual authentication. Then, the binding is performed, and the remotely controlled device performs related functions based on the operations of the bound remote controller. This solution eliminates the need to operate the remotely controlled device by using a remote controller dedicated thereto. Rather, the remotely controlled device can be operated so long as the binding is performed, thereby avoiding the problem that it is hard to promptly identify a desired remote controller from multiple remote controllers and improving the ease of use by the user.

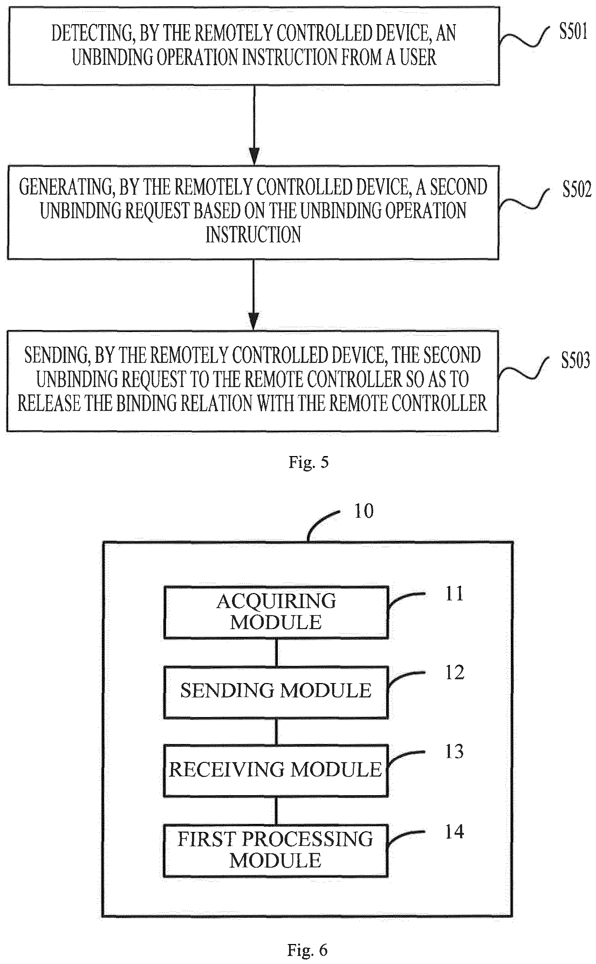

Fig. 5 is a flow chart showing a fifth embodiment of the processing method for binding the remote controller according to the invention. As shown in Fig. 5, the executor of the method is a remotely controlled device. Based on the above embodiment, the remotely controlled device performs a related function under the control of the remote controller. The user may cancel the binding according to actual needs. The processing method for binding the remote controller further comprises steps S501-S503 as below.

In step S501, the remotely controlled device detects an unbinding operation instruction from a user.

In this step, the user may directly operate a preset key on the remotely controlled device for cancelling the binding. The remotely controlled device can detect the unbinding operation instruction.

In step S502, the remotely controlled device generates a second unbinding request based on the unbinding operation instruction.

In step S503, the remotely controlled device sends the second unbinding request to the remote controller so as to release the binding relation with the remote controller.

In this embodiment, the unbinding is triggered by the remotely controlled device. In fact, it may be triggered by either the remotely controlled device or the remote controller. According to the technical solution of this invention, the same remote controller may be bound with multiple devices to control the multiple devices; and multiple remote controllers may be bound with the same device so that the multiple remote controllers can control the same device.

Optionally, the triggering of the unbinding by the remote controller may be implemented by performing the steps of: receiving, by the remotely controlled device, a first unbinding request containing the identification information of the remote controller and sent by the remote controller; releasing, by the remotely controlled device, the binding relation with the remote controller and generating, by the remotely controlled device, an unbinding response message based on the first unbinding request; and sending, by the remotely controlled device, the unbinding response message to the remote controller.

The first unbinding request contains the identification information of the remote controller, such that the remotely controlled device can identify which remote controller is to be unbound from the remotely controlled device.

According to the technical solution provided by any of the above embodiments, the remotely controlled device and the remote controller need to be improved. Remotely controlled devices such as TVs, set-top boxes, etc. will have no remote controller bound therewith, when leaving factory. However, after receiving from any remote controller a Bluetooth control instruction (carrying the MAC address of the remote controller) for the first time, the remotely controlled device will have the remote controller automatically bound therewith. To this end, the user may operate as below. The user presses a special key on the TV/set-top box to make the device enter a binding mode (or the TV/set-top box automatically enters a binding mode if it is not bound with any remote controller). The user presses a "binding" key on the remote controller. The remote controller sends a wireless message containing its MAC address. After receiving the message, the TV/set-top box will have the remote controller automatically bound therewith.

When the user needs to unbind the remote controller from the device, the user may press a special key on the TV/box or a special key on the remote controller for unbinding the remote controller. In this way, the same remote controller can control multiple devices (simultaneously). For example, by long-pressing either the "binding" key on the remote controller or the "binding" key on the TV for 5 seconds, the remote controlled can be unbound from the device.

According to the processing method for binding the remote controller provided by the embodiment of the present invention, the remotely controlled device can either initiatively make an unbinding request to the remote controller based on the user's operation or receive an unbinding request from the remote controller, in order to release the binding relation between the remote controller and the remotely controlled device. Thus, binding and unbinding can be realized at the user's will, thereby improving the ease of use and effectively enhancing the user experience.

Fig. 6 is a block diagram illustrating a first embodiment of a processing apparatus for binding a remote controller according to the invention. Referring to Fig. 6, the processing apparatus for binding a remote controller 10 comprises: an acquiring module 11 configured to acquire a binding operation instruction; a sending module 12 configured to send a binding request containing identification information of the processing apparatus for binding the remote controller to a remotely controlled device which the remote controller is to be bound with, such that the remotely controlled device generates a binding response message based on the binding request, the binding response message carrying authentication information for binding the processing apparatus for binding the remote controller; a receiving module 13 configured to receive the binding response message returned by the remotely controlled device; and a first processing module 14 configured to perform binding with the remotely controlled device based on the binding response message, so as to control the remotely controlled device.

According to the processing apparatus for binding a remote controller provided by the embodiment of the present invention, a binding operation instruction is acquired from a user by an acquiring module, and a binding request is sent by a sending module to a remotely controlled device which the remote controller is to be bound with, such that the remotely controlled device generates related authentication information for a first processing module to bind the remote controller. As such, the same apparatus can be bound with multiple devices to realize collective control, thereby avoiding the problem that it is hard to promptly identify a desired remote controller from multiple remote controllers and enhancing the user experience.

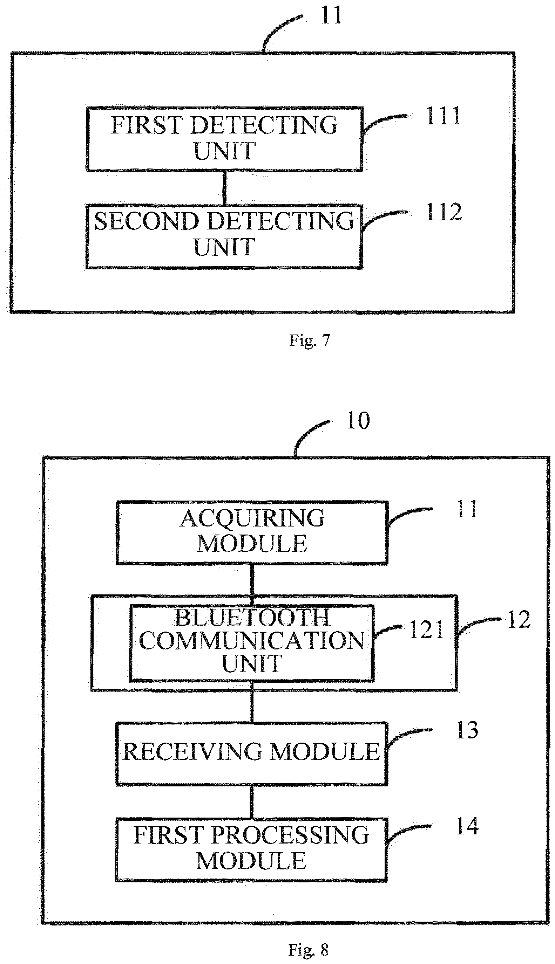

Based on the embodiment shown in Fig. 6, Fig. 7 is a block diagram illustrating a second embodiment of the processing apparatus for binding the remote controller according to the invention. Referring to Fig. 7, the acquiring module 11 comprises: a first detecting unit 111 configured to detect a user's pressing operation on a binding key as the binding operation instruction; or a second detecting unit 112 configured to detect a user's shaking operation on the remote controller as the binding operation instruction.

Based on the embodiment shown in Fig. 6, Fig. 8 is a block diagram illustrating a third embodiment of the processing apparatus for binding the remote controller according to the invention. Referring to Fig. 8, the sending module 12 comprises: a Bluetooth communication unit 121 configured to send the binding request containing the identification information of the processing apparatus for binding the remote controller through Bluetooth broadcasting. The binding response message received by the receiving module 13 comprises Bluetooth pairing information generated by the remotely controlled device.

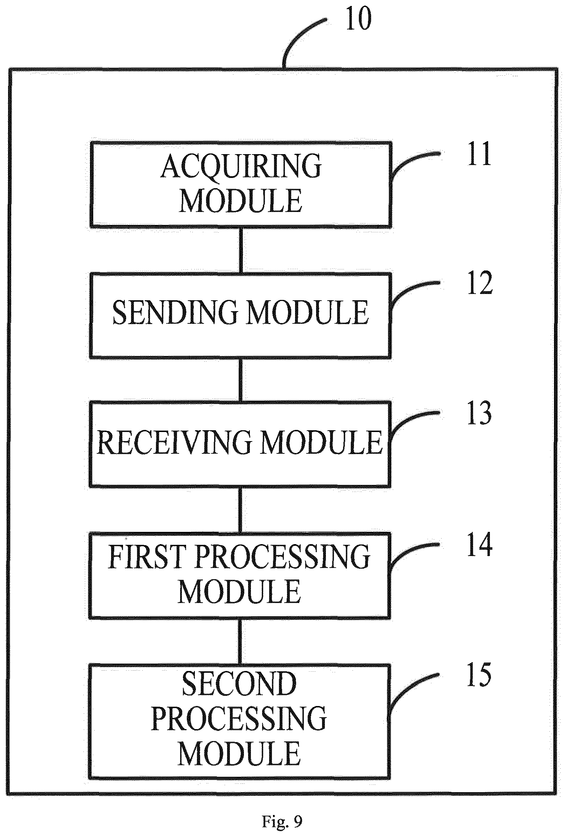

Based on the embodiment shown in any of Figs. 6-8, Fig. 9 is a block diagram illustrating a fourth embodiment of the processing apparatus for binding the remote controller according to the invention. Referring to Fig. 9, the apparatus 10 further comprises: a second processing module 15 configured to remotely control the remotely controlled device based on an operation of a user.

According to the processing apparatus for binding the remote controller provided by the embodiment of the present invention, a remote controller can detect a user's pressing operation on a function key of the remote controller or a special shaking operation of the user. As such, after binding, the remotely controlled device can be controlled by the remote controller through simple and convenient operations.

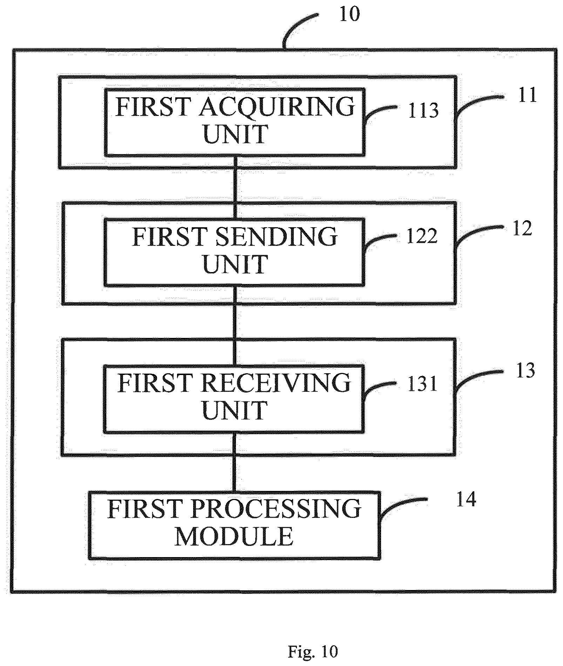

Based on the embodiment shown in any of Figs. 6-9, Fig. 10 is a block diagram illustrating a fifth embodiment of the processing apparatus for binding the remote controller according to the invention. Referring to Fig. 10, the acquiring module 11 comprises: a first acquiring unit 113 configured to acquire an unbinding operation instruction. The sending module 12 comprises a first sending unit 122 configured to send a first unbinding request containing the identification information of the processing apparatus for binding the remote controller to the remotely controlled device which the remote controller is bound with, such that the remotely controlled device releases the binding relation with the processing apparatus for binding the remote controller and generates an unbinding response message. The receiving module 13 comprises a first receiving unit 131 configured to receive the unbinding response message sent by the remotely controlled device.

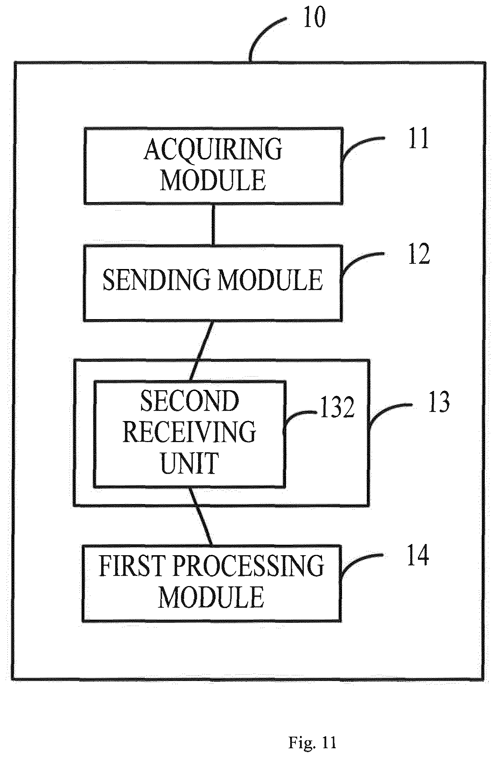

Based on the embodiment shown in any of Figs. 6-10, Fig. 11 is a block diagram illustrating a sixth embodiment of the processing apparatus for binding the remote controller according to the invention. Referring to Fig. 11, the receiving module 13 further comprises: a second receiving unit 132 configured to receive a second unbinding request sent by the remotely controlled device, the second unbinding request being sent after the remotely controlled device detects an unbinding operation instruction from the user. The first processing module 14 is further configured to release the binding relation with the remotely controlled device based on the second unbinding request.

According to the processing apparatus for binding the remote controller provided by the embodiments of the present invention, after the remote controller is bound with the remotely controlled device according to any of the above solutions, multiple devices can be operated by the same remote controller. If the binding needs to be released, it can be realized by operating either the remote controller or the remotely controlled device. Similar to the binding process, it is needed to send an unbinding message to the counterpart according to the user's operation, in order to release the binding. Thus, binding and unbinding can be realized at the user's will, thereby improving the ease of use and effectively enhancing the user experience.

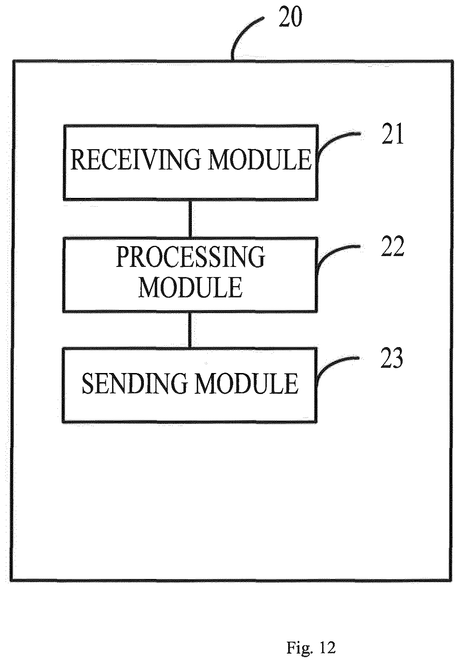

Fig. 12 is a block diagram illustrating a seventh embodiment of the processing apparatus for binding the remote controller according to the invention. Referring to Fig. 12, the processing apparatus for binding a remote controller 20 comprises: a receiving module 21 configured to receive a binding request containing identification information of the remote controller and sent by the remote controller; a processing module 22 configured to generate a binding response message based on the binding request, the binding response message carrying authentication information for binding the remote controller; and a sending module 23 configured to send the binding response message to the remote controller, such that the remote controller performs binding with the processing apparatus for binding the remote controller based on the binding response message so as to control the remotely controlled device.

According to the processing apparatus for binding the remote controller provided by the embodiment of the present invention, after the receiving module receives the binding request sent by the remote controller when no remote controller is bound with the remotely controlled device, the processing module generates a binding response message carrying authentication information, and the sending module sends the same to the remote controller for mutual authentication. Then, the binding is performed, and the remotely controlled device performs related functions based on the operations of the bound remote controller. This solution eliminates the need to operate the remotely controlled device by using a remote controller dedicated thereto. Rather, the remotely controlled device can be operated as long as the binding is performed, thereby avoiding the problem that it is hard to promptly identify a desired remote controller from multiple remote controllers and improving the ease of use by the user.

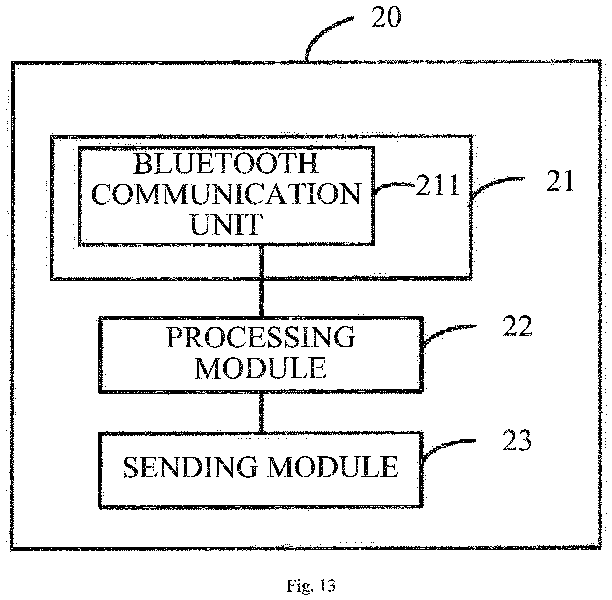

Based on the embodiment shown in Fig. 12, Fig. 13 is a block diagram illustrating an eighth embodiment of the processing apparatus for binding the remote controller according to invention. Referring to Fig. 13, the receiving module 21 comprises: a Bluetooth communication unit 211 configured to receive the binding request containing the identification information of the remote controller and broadcast by the remote controller via Bluetooth, wherein the binding response message comprises Bluetooth pairing information generated by the processing apparatus for binding the remote controller.

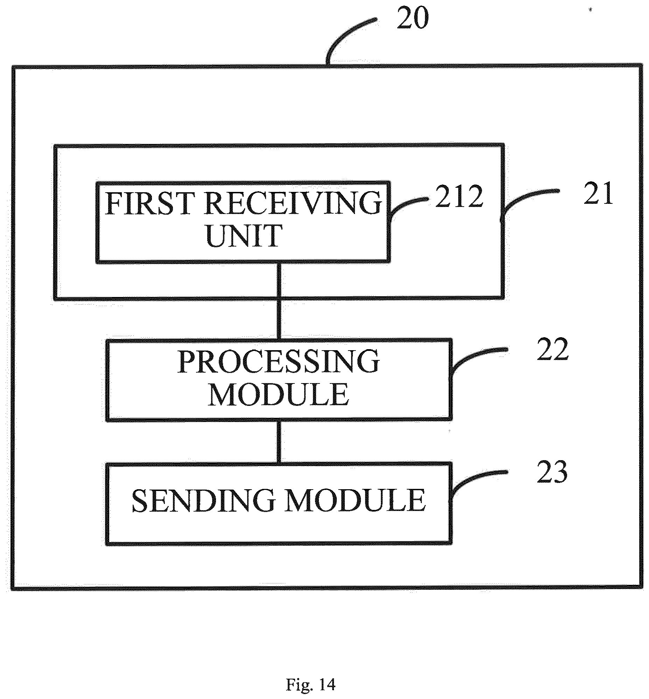

Based on the embodiment shown in Fig. 12 or Fig. 13, Fig. 14 is a block diagram illustrating a ninth embodiment of the processing apparatus for binding the remote controller according to the invention. Referring to Fig. 14, the receiving module 21 comprises: a first receiving unit 212 configured to receive an operation request sent by the remote controller and perform a corresponding operation based on the operation request.

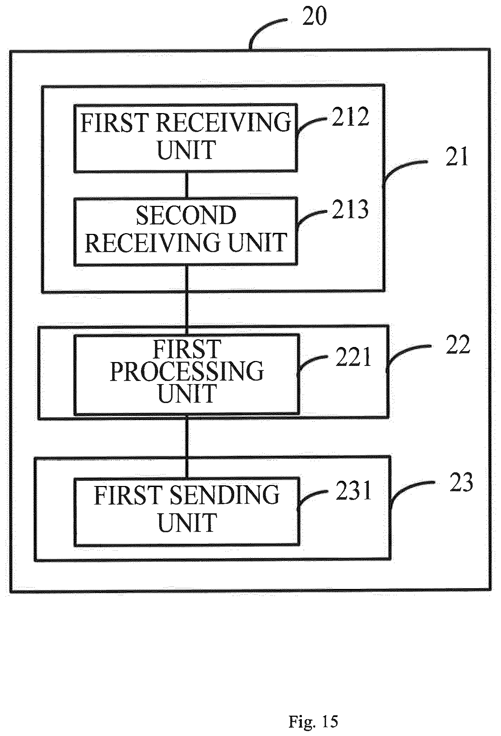

Based on the embodiment shown in Fig. 14, Fig. 15 is a block diagram illustrating a tenth embodiment of the processing apparatus for binding the remote controller according to the invention. Referring to Fig. 15, the receiving module 21 further comprises: a second receiving unit 213 configured to receive a first unbinding request containing the identification information of the remote controller and sent by the remote controller. The processing module 22 comprises a first processing unit 221 configured to release the binding relation with the remote controller and generate an unbinding response message, based on the first unbinding request. The sending module 23 comprises a first sending unit 231 configured to send the unbinding response message to the remote controller.

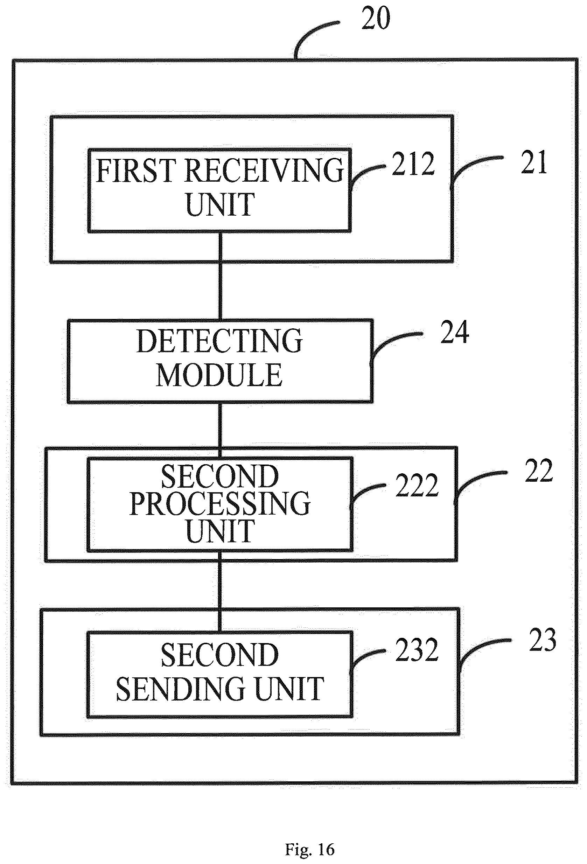

Based on the embodiment shown in Fig. 14, Fig. 16 is a block diagram illustrating an eleventh embodiment of the processing apparatus for binding the remote controller according to the invention. Referring to Fig. 16, the apparatus 20 further comprises: a detecting module 24 configured to detect an unbinding operation instruction from a user. The processing module 22 comprises a second processing unit 222 configured to generate a second unbinding request based on the unbinding operation instruction; and the sending module 23 comprises a second sending unit 232 configured to send the second unbinding request to the remote controller so as to release the binding relation with the remote controller.

The processing apparatus for binding a remote controller provided by the embodiment of the present invention is equivalent to a remotely controlled device, which can either initiatively send an unbinding request to the remote controller based on the user's operation or receive an unbinding request sent by the remote controller, in order to release the binding relation between the remote controller and the remotely controlled device. Thus, binding and unbinding can be realized at the user's will, thereby improving the ease of use and effectively enhancing the user experience.

With respect to the remote controller and the remotely controlled device in the above embodiments, the specific manners for the individual modules to perform operations have been described in detail in the embodiments of the related methods and will not be elaborated herein.

The above has described the internal functional modules and schematic structures of the remote controller and the remotely controlled device.

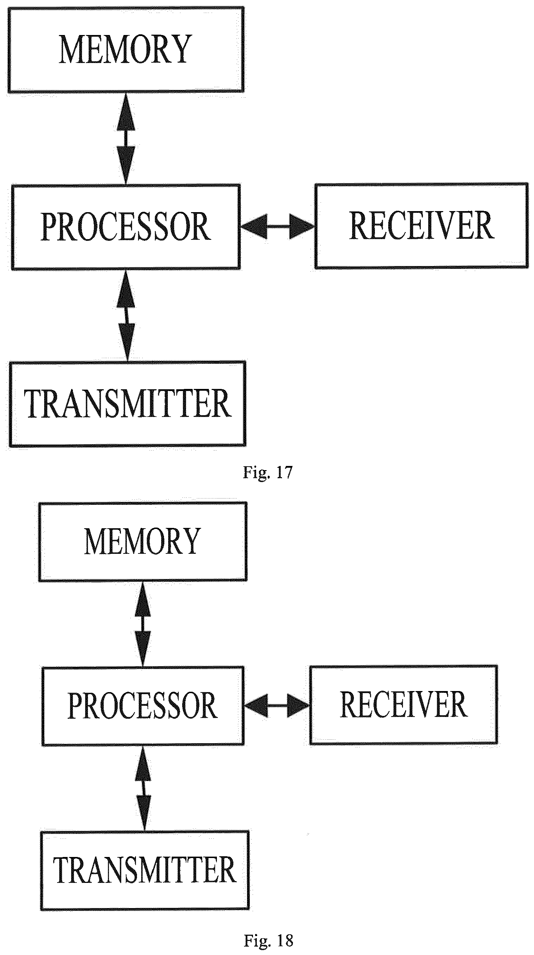

Fig. 17 is a block diagram showing a physical structure of a remote controller according to an exemplary embodiment. Referring to Fig. 17, the remote controller may be implemented as including: a processor configured to control execution of executable instructions, a memory configured to store the executable instructions executable by the processor, a receiver and a transmitter. The processor is configured to acquire a binding operation instruction. The transmitter is configured to send a binding request containing identification information of the remote controller to a remotely controlled device which the remote controller is to be bound with, such that the remotely controlled device generates a binding response message based on the binding request, the binding response message carrying authentication information for binding the remote controller. The receiver is configured to receive the binding response message returned by the remotely controlled device. The processor is further configured to perform binding with the remotely controlled device based on the binding response message, so as to control the remotely controlled device.

Fig. 18 is a block diagram showing a physical structure of a remotely controlled device according to an exemplary embodiment. Referring to Fig. 18, the remotely controlled device may be implemented as including: a processor configured to control execution of executable instructions, a memory configured to store the executable instructions executable by the processor, a receiver and a transmitter. The receiver is configured to receive a binding request containing identification information of a remote controller and sent by the remote controller. The processor is configured to generate a binding response message based on the binding request, the binding response message carrying authentication information for binding the remote controller. The transmitter is configured to send the binding response message to the remote controller, such that the remote controller performs binding with the remotely controlled device based on the binding response message so as to control the remotely controlled device.

In the above embodiments of the remote controller and the remotely controlled device, it should be understood that the processor may be a central processing unit (CPU) or any other general-purpose processor, a digital signal processor (DSP), an application specific integrated circuit (ASIC) or the like. The general-purpose processor may be a microprocessor or any other conventional processor. The above-mentioned memory may be a read-only memory (ROM), a random access memory (RAM), a flash memory, a hard disk or a solid state disk. A SIM card, also called a user identification card or a smart card, needs to be mounted in a digital mobile phone before using the phone. That is, information of a user of the digital mobile phone, an encryption key and the user's phonebook are stored in the computer chip. The steps of the methods disclosed by the embodiments of the present invention may be performed by a hardware processor or by a combination of hardware of a processor and software modules.

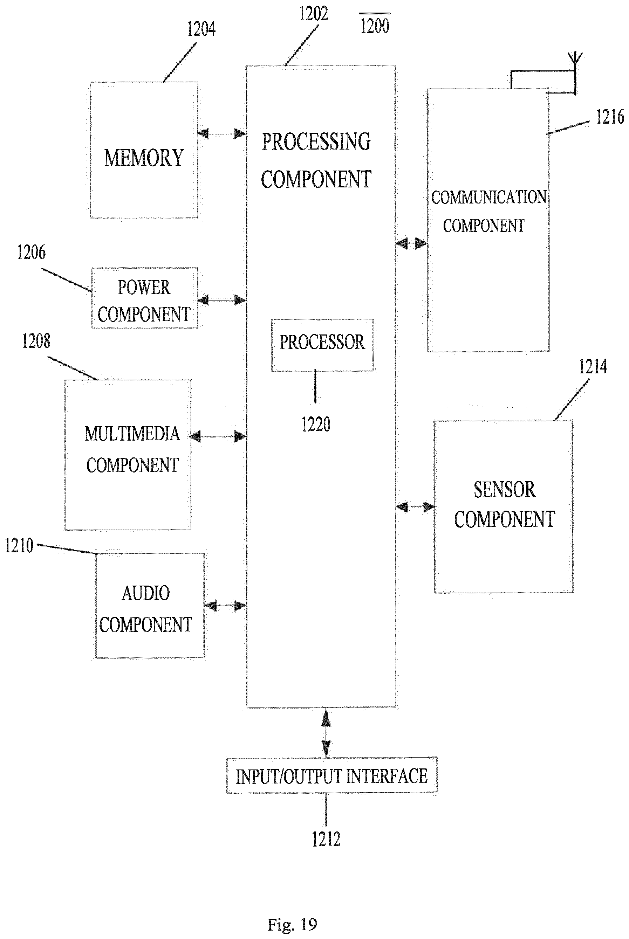

Fig. 19 is a block diagram of a remotely controlled device 1200 according to an exemplary embodiment. Fox example, the remotely controlled device 1200 may be a device which can be controlled by a remote controller, such as a mobile phone, a computer, a smart TV, a message transceiver, a tablet device, a medical device, a server, a smart home appliance such as an air conditioner etc.

Referring to Fig. 19, the remotely controlled device 1200 may comprise one or more following components: a processing component 1202, a memory 1204, a power component 1206, a multimedia component 1208, an audio component 1210, an input/output (I/O) interface 1212, a sensor component 1214 and a communication component 1216.

The processing component 1202 typically controls overall operations of the remotely controlled device 1200, such as the operations associated with display, data communications, multimedia operations and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For example, the processing component 1202 may comprise a multimedia module to facilitate the interaction between the multimedia component 1208 and the processing component 1202.

The memory 1204 is configured to store various types of data to support the operation of the remotely controlled device 1200. Examples of such data comprise instructions for any applications or methods operated on the remotely controlled device 1200, various kinds of data, messages, pictures, video, etc. The memory 1204 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the remotely controlled device 1200. The power component 1206 may comprise a power management system, one or more power sources, and any other components associated with the generation, management, and distribution of power in the remotely controlled device 1200.

The multimedia component 1208 comprises a screen providing an output interface between the remotely controlled device 1200 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action.

The audio component 1210 is configured to output and/or input audio signals. For example, the audio component 1210 includes a microphone (MIC) configured to receive an external audio signal when the remotely controlled device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like.

The sensor component 1214 comprises one or more sensors to provide status assessments of various aspects of the remotely controlled device 1200. For instance, the sensor component 1214 may detect an open/closed status of the remotely controlled device 1200, relative positioning of components, e.g., the display and the keypad, of the remotely controlled device 1200, a change in position of the remotely controlled device 1200 or a component of the remotely controlled device 1200, presence or absence of user's contact with the remotely controlled device 1200, an orientation or an acceleration/deceleration of the remotely controlled device 1200, and a change in temperature of the remotely controlled device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor or a temperature sensor.

The communication component 1216 is configured to facilitate communication, wired or wirelessly, between the remotely controlled device 1200 and other devices. The remotely controlled device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the remotely controlled device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing a processing method for binding a remote controller. The method comprises: receiving, by the remotely controlled device, a binding request containing identification information of the remote controller and sent by the remote controller; generating, by the remotely controlled device, a binding response message based on the binding request, the binding response message carrying authentication information for binding the remote controller; and sending, by the remotely controlled device, the binding response message to the remote controller, such that the remote controller performs binding with the remotely controlled device based on the binding response message, so as to control the remotely controlled device.

In an exemplary embodiment, there is also provided a non-transitory computer-readable storage medium comprising instructions, such as comprised in the memory 1204, executable by the processor 1220 in the remotely controlled device 1200, for performing the above-described methods. For example, the non-transitory computer-readable storage medium may be a ROM, a RAM, a CD-ROM, a magnetic tape, a floppy disc, an optical data storage device, and the like.

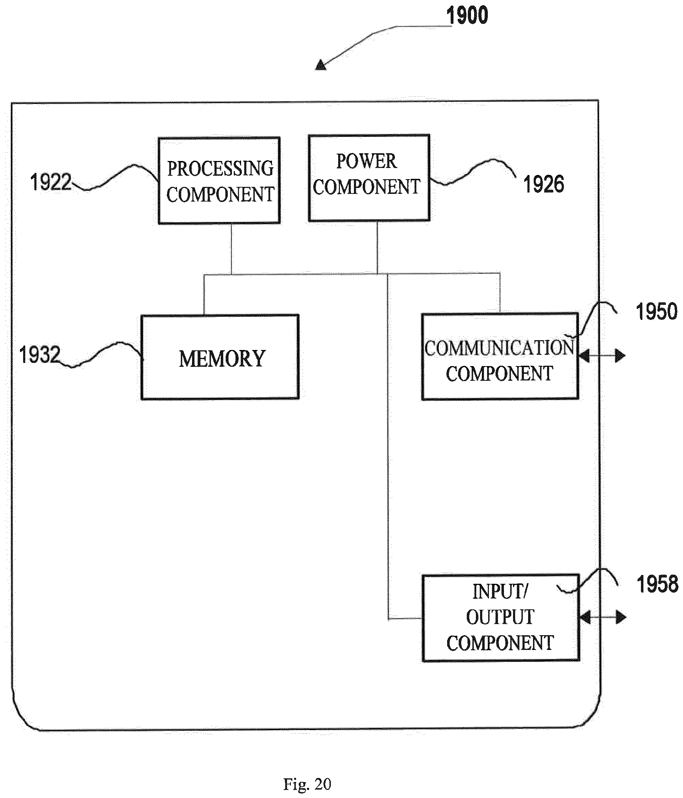

Fig. 20 is a block diagram of a remote controller 1900 according to an exemplary embodiment. For example, the remote controller 1900 may be provided as a server. Referring to Fig. 20, the remote controller 1900 comprises: a processing component 1922 which further comprises one or more processors; and memory resources represented by a memory 1932 for storing instructions executable by the processing component 1922, such as applications. The applications stored in the memory 1932 may comprise one or more modules, each corresponding to a set of instructions. In addition, the processing component 1922 is configured to execute instructions to perform a processing method for binding a remote controller. The method comprises: acquiring a binding operation instruction by the remote controller; sending, by the remote controller, a binding request containing identification information of the remote controller to a remotely controlled device which the remote controller is to be bound with, such that the remotely controlled device generates a binding response message based on the binding request, the binding response message carrying authentication information for binding the remote controller; receiving, by the remote controller, the binding response message returned by the remotely controlled device; and performing, by the remote controller, binding with the remotely controlled device based on the binding response message, so as to control the remotely controlled device.

The remote controller 1900 may further comprise: a power component 1926 configured to perform power management for the remote controller 1900, a communication component 1950 configured to perform communications between the remote controller 1900 and the remotely controlled device, and an input/output component 1958 configured to collect operations of users.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A processing method for binding a remote controller, comprising:
acquiring (101), by the remote controller, a binding operation instruction;
sending (102), by the remote controller, a binding request containing identification information of the remote controller to a remotely controlled device which the remote controller is to be bound with, such that the remotely controlled device generates a binding response message based on the binding request, the binding response message carrying authentication information for binding the remote controller;
receiving (103), by the remote controller, the binding response message returned by the remotely controlled device; and
performing (104), by the remote controller, authentication based on the authentication information in the binding response message , and binding, by the remote controller, with the remotely controlled device if the authentication is successful, so as to control the remotely controlled device.

2. The method of claim 1, wherein acquiring (101) the binding operation instruction by the remote controller comprises:
detecting, by the remote controller, a user's pressing operation on a binding key, as the binding operation instruction; or
detecting, by the remote controller, a user's shaking operation on the remote controller, as the binding operation instruction.

3. The method of claim 1, wherein sending (102) by the remote controller the binding request containing the identification information of the remote controller to the remotely controlled device which the remote controller is to be bound with comprises: sending, by the remote controller, the binding request containing the identification information of the remote controller through Bluetooth broadcasting, wherein the binding response message comprises Bluetooth pairing information generated by the remotely controlled device.

4. The method of any of claims 1-3, further comprising: remotely controlling the remotely controlled device by the remote controller based on an operation of a user.

5. The method of claim 4, wherein after remotely controlling the remotely controlled device by the remote controller based on the operation of the user, the method further comprises:
acquiring (201), by the remote controller, an unbinding operation instruction;
sending (202), by the remote controller, a first unbinding request containing the identification information of the remote controller to the remotely controlled device which the remote controller is bound with, such that the remotely controlled device releases the binding relation with the remote controller and generates an unbinding response message; and
receiving (203), by the remote controller, the unbinding response message sent by the remotely controlled device.

6. The method of claim 4, wherein after remotely controlling the remotely controlled device by the remote controller based on the operation of the user, the method further comprises:
receiving (301), by the remote controller, a second unbinding request sent by the remotely controlled device, the second unbinding request being sent after the remotely controlled device detects an unbinding operation instruction from the user; and
releasing (302), by the remote controller, the binding relation with the remotely controlled device based on the second unbinding request.

7. A processing apparatus for binding a remote controller, comprising:
an acquiring module (11) configured to acquire a binding operation instruction;
a sending module (12) configured to send a binding request containing identification information of the processing apparatus for binding the remote controller to a remotely controlled device which the remote controller is to be bound with, such that the remotely controlled device generates a binding response message based on the binding request, the binding response message carrying authentication information for binding the processing apparatus for binding the remote controller;
a receiving module (13) configured to receive the binding response message returned by the remotely controlled device; and
a first processing module (14) configured to perform authentication based on the authentication information in the binding response message, and binding with the remotely controlled device if the authentication is successful, so as to control the remotely controlled device.

8. The apparatus of claim 7, wherein the acquiring module (11) comprises:
a first detecting unit (111) configured to detect a user's pressing operation on a binding key as the binding operation instruction; or
a second detecting unit (112) configured to detect a user's shaking operation on the remote controller as the binding operation instruction.

9. The apparatus of claim 7, wherein the sending module (12) comprises: a Bluetooth communication unit (121) configured to send the binding request containing the identification information of the processing apparatus for binding the remote controller through Bluetooth broadcasting, wherein the binding response message received by the receiving module comprises Bluetooth pairing information generated by the remotely controlled device.

10. The apparatus of any of claims 7-9, further comprising: a second processing module (15) configured to remotely control the remotely controlled device based on an operation of a user.

11. The apparatus of claim 10, wherein the acquiring module (11) comprises a first acquiring unit (113) configured to acquire an unbinding operation instruction;
the sending module (12) comprises a first sending unit (122) configured to send a first unbinding request containing the identification information of the processing apparatus for binding the remote controller to the remotely controlled device which the remote controller is bound with, such that the remotely controlled device releases the binding relation with the processing apparatus for binding the remote controller and generates an unbinding response message; and
the receiving module (13) comprises a first receiving unit (131) configured to receive the unbinding response message sent by the remotely controlled device.

12. The apparatus of claim 10, wherein the receiving module (13) comprises a second receiving unit (132) configured to receive a second unbinding request sent by the remotely controlled device, the second unbinding request being sent after the remotely controlled device detects an unbinding operation instruction from the user; and
the first processing module (14) is further configured to release the binding relation with the remotely controlled device based on the second unbinding request.

13. A computer program including instructions for executing the steps of a processing method for binding a remote controller according to any one of claims 1 to 6, when said program is executed by a computer.

14. A recording medium readable by a computer and having recorded thereon a computer program including instructions for executing the steps of a processing method for binding a remote controller according to any one of claims 1 to 6.

## Patentansprüche

1. Verarbeitungsverfahren zum Anbinden eines Fernsteuergeräts, umfassend:
Erfassen (101) einer Anbindungshandlungsanweisung durch das Fernsteuergerät;
Senden (102) einer Identifikationsinformationen des Fernsteuergeräts enthaltenden Anbindungsanforderung durch das Fernsteuergerät zu einer ferngesteuerten Vorrichtung, an die das Fernsteuergerät anzubinden ist, so dass die ferngesteuerte Vorrichtung auf Basis der Anbindungsanforderung eine Anbindungsantwortnachricht erzeugt, wobei die Anbindungsantwortnachricht Authentifizierungsinformationen zum Anbinden des Fernsteuergeräts trägt,
Empfangen (103) der von der ferngesteuerten Vorrichtung zurückgesendeten Anbindungsantwortnachricht durch das Fernsteuergerät; und
Durchführen (104) von Authentifizierung durch das Fernsteuergerät auf Basis der Authentifizierungsinformationen in der Anbindungsantwortnachricht und Anbinden, durch das Fernsteuergerät, an die ferngesteuerte Vorrichtung, wenn die Authentifizierung erfolgreich ist, um die ferngesteuerte Vorrichtung zu steuern.

2. Verfahren nach Anspruch 1, wobei das Erfassen (101) der Anbindungshandlungsanweisung durch das Fernsteuergerät Folgendes aufweist:
Erkennen, durch das Fernsteuergerät, einer Drückhandlung eines Benutzers auf eine Anbindungstaste als die Anbindungshandlungsanweisung; oder
Erkennen, durch das Fernsteuergerät, einer Schüttelhandlung eines Benutzers am Fernsteuergerät als die Anbindungshandlungsanweisung.

3. Verfahren nach Anspruch 1, wobei das Senden (102) der die Identifikationsinformationen des Fernsteuergeräts enthaltenden Anbindungsanforderung durch das Fernsteuergerät an die ferngesteuerte Vorrichtung, an die das Fernsteuergerät anzubinden ist, Folgendes aufweist:
Senden, durch das Fernsteuergerät, der die Identifikationsinformationen des Fernsteuergeräts enthaltenden Anbindungsanforderung durch Bluetooth-Broadcasting, wobei die Anbindungsantwortnachricht von der ferngesteuerten Vorrichtung erzeugte Bluetooth-Kopplungsinformationen umfasst.

4. Verfahren nach einem der Ansprüche 1 bis 3, das ferner Folgendes aufweist: Fernsteuern der ferngesteuerten Vorrichtung durch das Fernsteuergerät auf Basis einer Handlung eines Benutzers.

5. Verfahren nach Anspruch 4, wobei das Verfahren nach dem Fernsteuern der ferngesteuerten Vorrichtung durch das Fernsteuergerät auf Basis der Handlung des Benutzers ferner Folgendes aufweist:
Erfassen (201) einer Abtrennungshandlungsanweisung durch das Fernsteuergerät;
Senden (202) einer die Identifikationsinformationen des Fernsteuergeräts enthaltenden ersten Abtrennungsanforderung durch das Fernsteuergerät an die ferngesteuerte Vorrichtung, an die das Fernsteuergerät angebunden ist, so dass die ferngesteuerte Vorrichtung die Bindungsbeziehung mit dem Fernsteuergerät auflöst und eine Abtrennungsantwortnachricht erzeugt; und
Empfangen (203) der von der ferngesteuerten Vorrichtung gesendeten Abtrennungsantwortnachricht durch das Fernsteuergerät.

6. Verfahren nach Anspruch 4, wobei das Verfahren nach dem Fernsteuern der ferngesteuerten Vorrichtung durch das Fernsteuergerät auf Basis der Handlung des Benutzers ferner Folgendes aufweist:
Empfangen (301) einer von der ferngesteuerten Vorrichtung gesendeten zweiten Abtrennungsanforderung durch das Fernsteuergerät, wobei die zweite Abtrennungsanforderung gesendet wird, nachdem die ferngesteuerte Vorrichtung eine Abtrennungshandlungsanweisung vom Benutzer erkennt; und
Auflösen (302) der Bindungsbeziehung mit der ferngesteuerten Vorrichtung durch das Fernsteuergerät auf Basis der zweiten Abtrennungsanforderung.

7. Verarbeitungsvorrichtung zum Anbinden eines Fernsteuergeräts, umfassend:
ein Erfassungsmodul (11), das zum Erfassen einer Anbindungshandlungsanweisung konfiguriert ist;
ein Sendemodul (12), das konfiguriert ist zum Senden einer Identifikationsinformationen der Verarbeitungsvorrichtung enthaltenden Anbindungsanforderung durch das Fernsteuergerät zu einer ferngesteuerten Vorrichtung zum Anbinden des Fernsteuergeräts an eine ferngesteuerte Vorrichtung, an die das Fernsteuergerät anzubinden ist, so dass die ferngesteuerte Vorrichtung auf Basis der Anbindungsanforderung eine Anbindungsantwortnachricht erzeugt, wobei die Anbindungsantwortnachricht Authentifizierungsinformationen zum Anbinden der Verarbeitungsvorrichtung zum Anbinden des Fernsteuergeräts trägt,
ein Empfangsmodul (13), das zum Empfangen der von der ferngesteuerten Vorrichtung zurückgesendeten Anbindungsantwortnachricht konfiguriert ist; und
ein erstes Verarbeitungsmodul (14), das konfiguriert ist zum Durchführen von Authentifizierung auf Basis der Authentifizierungsinformationen in der Anbindungsantwortnachricht und zum Anbinden an die ferngesteuerte Vorrichtung, wenn die Authentifizierung erfolgreich ist, um die ferngesteuerte Vorrichtung zu steuern.

8. Vorrichtung nach Anspruch 7, wobei das Erfassungsmodul (11) Folgendes aufweist:
eine erste Erkennungseinheit (111), die zum Erkennen einer Drückhandlung eines Benutzers auf eine Anbindungstaste als die Anbindungshandlungsanweisung konfiguriert ist; oder
eine zweite Erkennungseinheit (112), die zum Erkennen einer Schüttelhandlung eines Benutzers am Fernsteuergerät als die Anbindungshandlungsanweisung konfiguriert ist.

9. Vorrichtung nach Anspruch 7, wobei das Sendemodul (12) Folgendes aufweist: eine Bluetooth-Kommunikationseinheit (12), die zum Senden der die Identifikationsinformationen der Verarbeitungsvorrichtung enthaltenden Anbindungsanforderung zum Anbinden des Fernsteuergeräts durch Bluetooth-Broadcasting konfiguriert ist, wobei die vom Empfangsmodul empfangene Anbindungsantwortnachricht von der ferngesteuerten Vorrichtung erzeugte Bluetooth-Kopplungsinformationen umfasst.

10. Vorrichtung nach Anspruch 7 bis 9, die ferner Folgendes aufweist: ein zweites Verarbeitungsmodul (15), das zum Fernsteuern der ferngesteuerten Vorrichtung auf Basis einer Handlung eines Benutzers konfiguriert ist.

11. Vorrichtung nach Anspruch 10, wobei das Erfassungsmodul (11) eine erste Erfassungseinheit (113) aufweist, die zum Erfassen einer Abtrennungshandlungsanweisung konfiguriert ist;
wobei das Sendemodul (12) eine erste Sendeeinheit (122) aufweist, die konfiguriert ist zum Senden einer die Identifikationsinformationen der Verarbeitungsvorrichtung enthaltenden ersten Abtrennungsanforderung zum Anbinden des Fernsteuergeräts an die ferngesteuerte Vorrichtung, an die das Fernsteuergerät angebunden ist, so dass die ferngesteuerte Vorrichtung die Bindungsbeziehung mit der Verarbeitungsvorrichtung zum Anbinden des Fernsteuergeräts auflöst und eine Abtrennungsantwortnachricht erzeugt; und
wobei das Empfangsmodul (13) eine erste Empfangseinheit (131) aufweist, die zum Empfangen der von der ferngesteuerten Vorrichtung gesendeten Abtrennungsantwortnachricht konfiguriert ist.

12. Vorrichtung nach Anspruch 10, wobei das Empfangsmodul (13) eine zweite Empfangseinheit (132) aufweist, die zum Empfangen einer von der ferngesteuerten Vorrichtung gesendeten zweiten Abtrennungsanforderung konfiguriert ist, wobei die zweite Abtrennungsanforderung gesendet wird, nachdem die ferngesteuerte Vorrichtung eine Abtrennungshandlungsanweisung vom Benutzer erkennt; und
ein erstes Verarbeitungsmodul (14) ferner zum Auflösen der Bindungsbeziehung mit der ferngesteuerten Vorrichtung auf Basis der zweiten Abtrennungsanforderung konfiguriert ist.

13. Computerprogramm mit Anweisungen zum Ausführen der Schritte eines Verarbeitungsverfahrens zum Anbinden eines Fernsteuergeräts nach einem der Ansprüche 1 bis 6, wenn das genannte Programm von einem Computer ausgeführt wird.

14. Aufzeichnungsmedium, das von einem Computer lesbar ist und auf dem ein Computerprogramm mit Anweisungen zum Ausführen der Schritte eines Verarbeitungsverfahrens zum Anbinden eines Fernsteuergeräts nach einem der Ansprüche 1 bis 6 aufgezeichnet ist.

## Revendications

1. Procédé de traitement pour appairer un contrôler à distance, comprenant :
acquérir (101), par le contrôleur à distance, une instruction d'opération d'appairage ;
envoyer (102), par le contrôleur à distance, une requête d'appairage contenant une information d'identification du contrôleur à distance à un dispositif télécommandé auquel le contrôleur à distance doit être appairé, de telle sorte que le dispositif télécommandé génère un message de réponse d'appairage sur la base de la requête d'appairage, le message de réponse d'appairage portant l'information d'authentification pour appairer le contrôleur à distance ;
recevoir (103), par le contrôleur à distance, le message de réponse d'appairage renvoyé par le dispositif télécommandé ; et
effectuer (104), par le contrôleur à distance, une authentification sur la base de l'information d'authentification dans le message de réponse d'appairage, et s'appairer, par le contrôleur à distance, au dispositif télécommandé si l'authentification est réussie de manière à commander le dispositif télécommandé.

2. Procédé selon la revendication 1, dans lequel acquérir (101) l'instruction d'opération d'appairage par le contrôleur à distance comprend :
détecter, par le contrôleur à distance, une opération de pression de l'utilisateur sur une touche d'appairage, comme l'instruction d'opération d'appairage ; ou bien
détecter, par le contrôleur à distance, une opération de secousse de l'utilisateur sur le contrôleur à distance, comme l'instruction d'opération d'appairage.

3. Procédé selon la revendication 1, dans lequel envoyer (102), par le contrôleur à distance, la requête d'appairage contenant l'information d'identification du contrôleur à distance au dispositif télécommandé auquel le contrôleur à distance doit être appairé comprend : envoyer, par le contrôleur à distance, la requête d'appairage contenant l'information d'identification du contrôleur à distance par diffusion Bluetooth, où le message de réponse d'appairage comprend une information d'appariement Bluetooth générée par le dispositif télécommandé.

4. Procédé selon l'une quelconque des revendications 1-3, comprenant en outre :
télécommander le dispositif télécommandé par le contrôleur à distance sur la base d'une opération d'un utilisateur.

5. Procédé selon la revendication 4, dans lequel après avoir télécommandé le dispositif télécommandé par le contrôleur à distance sur la base de l'opération de l'utilisateur, le procédé comprend en outre :
acquérir (201), par le contrôleur à distance, une instruction d'opération de désappairage ; envoyer (202), par le contrôleur à distance, une première requête de désappairage contenant l'information d'identification du contrôleur à distance au dispositif télécommandé auquel le contrôleur à distance est appairé, de telle sorte que le dispositif télécommandé débloque la relation d'appairage avec le contrôleur à distance et génère un message de réponse de désappairage ; et
recevoir (203), par le contrôleur à distance, le message de réponse de désappairage envoyé par le dispositif télécommandé.

6. Procédé selon la revendication 4, dans lequel après avoir télécommandé le dispositif télécommandé par le contrôleur à distance sur la base de l'opération de l'utilisateur, le procédé comprend en outre :
recevoir (301), par le contrôleur à distance, une deuxième requête de désappairage envoyée par le dispositif télécommandé, la deuxième requête de désappairage étant envoyée après que le dispositif télécommandé a détecté une instruction d'opération de désappairage de l'utilisateur ; et
débloquer (302), par le contrôleur à distance, la relation d'appairage avec le dispositif télécommandé sur la base de la deuxième requête de désappairage.

7. Appareil de traitement pour appairer un contrôleur à distance, comprenant :
un module d'acquisition (11) configuré pour acquérir une instruction d'opération d'appairage ;
un module d'envoi (12) configuré pour envoyer une requête d'appairage contenant une information d'identification de l'appareil de traitement pour appairer le contrôleur à distance à un dispositif télécommandé auquel le contrôleur à distance doit être appairé, de telle sorte que le dispositif télécommandé génère un message de réponse d'appairage sur la base de la requête d'appairage, le message de réponse d'appairage portant l'information d'authentification pour appairer l'appareil de traitement pour appairer le contrôleur à distance ;
un module de réception (13) configuré pour recevoir le message de réponse d'appairage renvoyé par le dispositif télécommandé ; et
un premier module de traitement (14) configuré pour effectuer une authentification sur la base de l'information d'authentification dans le message de réponse d'appairage, et s'appairer au contrôleur à distance si l'authentification est réussie, de manière à commander le dispositif télécommandé.

8. Appareil selon la revendication 7, dans lequel le module d'acquisition (11) comprend :
une première unité de détection (111) configurée pour détecter une opération de pression de l'utilisateur sur une touche d'appairage comme l'instruction d'opération d'appairage ; ou bien
une deuxième unité de détection (112) configurée pour détecter une opération de secousse de l'utilisateur sur le contrôleur à distance comme l'instruction d'opération d'appairage.

9. Appareil selon la revendication 7, dans lequel le module d'envoi (12) comprend : une unité de communication Bluetooth (121) configurée pour envoyer la requête d'appairage contenant l'information d'identification de l'appareil de traitement pour appairer le contrôleur à distance par une diffusion Bluetooth, où le message de réponse d'appairage reçu par le module de réception comprend une information d'appariement Bluetooth générée par le dispositif télécommandé.

10. Appareil selon l'une quelconque des revendications 7-9, comprenant en outre : un deuxième module de traitement (15) configuré pour télécommander le dispositif télécommandé sur la base d'une opération d'un utilisateur.

11. Appareil selon la revendication 10, dans lequel le module d'acquisition (11) comprend une première unité d'acquisition (113) configurée pour acquérir une instruction d'opération de désappairage ;
le module d'envoi (12) comprend une première unité d'envoi (122) configurée pour envoyer une première requête de désappairage contenant l'information d'identification de l'appareil de traitement pour appairer le contrôleur à distance au dispositif télécommandé auquel contrôleur à distance est appairé, de telle sorte que le dispositif télécommandé débloque la relation d'appairage avec l'appareil de traitement pour appairer le contrôleur à distance et génère un message de réponse de désappairage ; et
le module de réception (13) comprend une première unité de réception (131) configurée pour recevoir le message de réponse de désappairage envoyé par le dispositif télécommandé.

12. Appareil selon la revendication 10, dans lequel le module de réception (13) comprend une deuxième unité de réception (132) configurée pour recevoir une deuxième requête de désappairage envoyée par le dispositif télécommandé, la deuxième requête de désappairage étant envoyée après que le dispositif télécommandé a détecté une instruction d'opération de désappairage de l'utilisateur ; et
le premier module de traitement (14) est configuré en outre pour débloquer la relation d'appairage avec le dispositif télécommandé sur la base de la deuxième requête de désappairage.

13. Programme informatique comprenant des instructions pour exécuter les étapes d'un procédé de traitement pour appairer un contrôleur à distance selon l'une quelconque des revendications 1 à 6, lorsque ledit programme est exécuté par un ordinateur.

14. Support d'enregistrement lisible par un ordinateur et ayant un programme informatique enregistré dessus comprenant des instructions pour exécuter les étapes d'un procédé de traitement pour appairer un contrôleur à distance selon l'une quelconque des revendications 1 à 6.
